# EUROPEAN PATENT APPLICATION

(11) **EP 1 484 694 A1**
(43) Date of publication of application: **08.12.2004**
(21) Application number: 03012789.8
(22) Date of filing: 05.06.2003
(51) Int. Cl.: G06F 17/30

(54) **Converting object structures for search engines**

(71) Applicant: SAP AG, 69190 Walldorf (DE)
(72) Inventor: Irle, Klaus, 69190 Walldorf (DE); Lu, Liwei, 69226 Nussloch (DE); Kindsvogel, Uwe, 76698 Ubstadt-Weiher (DE); Janssen, Tatjana, 31542 Bad Nenndorf (DE)
(74) Representative: COHAUSZ & FLORACK

(57) **Abstract**

The invention relates to a computer-implemented method, a computer program product, a computer, a computer-readable medium and a display for creating at least one readable object for search engines from at least one structured data object stored in a database. To enable the search to use conventional search methods and search engines, the structured data object may be extracted from the database, the structure and content of the data object may be mapped into a generic data model, and the readable object may be created from the generic data model.

## Description

### BACKGROUND

The present invention relates to a computer-implemented method for the provision of at least one readable object for access by a search engines from at least one structured data object stored in a database

The invention further relates to a computer program product for provision of at least one readable object for a search engine from at least one structured data object stored in a database.

The invention also relates to a computer to provide at least one readable object for a search engine from at least one structured data object stored in a database.

The invention further relates to a computer-readable medium with a computer program product stored thereon to provide at least one readable object for a search engine from at least one structured data object stored in a database.

Finally, the invention relates to a display of a searchable document structure comprised from least one structured data object stored in a database, on a display.

In ERP software products, data objects are stored within structured objects. Business objects in this case may be data objects which can relate to various areas within a company, for example, to client data, factory structures, machine structures, production sequences, lists of materials, lists of staff and many others. The structure of the data objects may be predetermined by the real conditions within the company and for maintenance. The data objects may simulate these real structures.

The contents of the data objects may represent the current state of each particular company structure being mapped within the objects and thus allow computer-aided planning, maintenance and the operation of a company with the aid of ERP software.

Various data objects can be interlinked and can thus represent an entire company network in an object structure which may be hierarchical. The mesh of objects should thus represent the actual structure of the company as far as possible.

In order to search for information within the data objects, the user requires a user-friendly user interface as well as fast and reliable access to the data. With conventional search engines, such as those available on the Internet, for example, document-like objects are almost exclusively displayed. These document-like objects, for example, text documents, are structured only slightly and can be searched with the aid of simple algorithms. The content of the text documents can be indexed automatically in most cases. The search engines access the created index during their search. However, they can also execute a full text search.

During the search the keyword being sought may be searched for in the index or in the full text. In the event of a match, a link to the corresponding text document may be output. The user may then directly access the text document via this link.

Text documents are also contained within business objects, but these texts are not stored within a flat document structure but in structured data objects. It is nearly impossible to search within these structured data objects with acceptable response times and good search results using conventional search engines. Since the user himself generally does not know the structure of the business objects, he can only search for information with considerable effort. A search within the business objects is almost impossible with conventional search strategies of search engines.

The present invention presents advantages over the prior art in that technical embodiments of present invention solve one or more of the technical problems of the prior art in data searching. For instance, an embodiment of the present invention may address the need for efficient searching within structured data objects with the aid of conventional search algorithms. Given embodiments of the present invention also may address the need to map structured data objects in a fashion readable by conventional search engines, while some embodiments may address the need to facilitate indexing of such structured data objects, allowing more flexible options in searching structured data objects.

### SUMMARY

An exemplary computer-implemented method according to the present invention may comprise: extracting of said structured data object from said database, mapping structure and contents of said structured data object into a generic data model, the generic data model including nodes related by links and having contents, and creating said readable object from said generic data model.

Such an exemplary computer-implemented method according to the present invention may achieve in a technical manner such technical results as enabling an efficient search within structured data objects with the aid of conventional search algorithms, mapping the structured data objects into a readable fashion, or allowing indexing of contents of data objects.

Said data objects may be stored in databases. The databases allow access to the data via interfaces, such as for example SQL. The data objects may be extracted from the database via suitable instructions between the interfaces. Both the structure and the contents of the data objects may be then mapped into a generic data model.

In this case, a data object can be divided into nodes, links and contents. The structure then may be obtained from the mesh of nodes and links. This structure may be mapped into a data model. The data model may be a mesh of nodes and links which may have a hierarchical structure. The structure of the data object may be a concatenation of a plurality of objects which represents the structure of the real object together with its attributes. The nodes, the links and the contents can be treated separately from one another which can be understood as loose coupling. An advantage may arise here in that the data structure and the respective contents need not be fixedly connected and may be dynamically exchangeable and combinable.

The generic data structure allows the conversion of a data object into a readable object for search engines, in particular a searchable document structure or a text document, to be implemented using a uniform algorithm. After the structure and the content of the data object have been mapped into the generic data model, the readable object may be created from the generic data model using a uniform algorithm.

This readable object can be a searchable document structure or a text document. Such a readable object may be readable and searchable with the aid of conventional search engines and can be indexed. The search may be executed within the document structure of the readable object, allowing the use of known search strategies. The result of the search can result in the output of the document structure or can contain a link to the actual data object.

It has been found that a data structure can be well mapped with the aid of three tables. In this case, it may be advantageous to create respectively one table for the nodes, one table for the links and one table for the objects themselves, i.e., the content of the business objects.

The node table, for example, may contain a node number, the name of the hierarchical structure, the type of node, its date of amendment, its date of creation, the creator, validity information and further information required for the administration of the business object. The link table gives information about the links between the nodes so that, for example, the identification numbers of the father node and the son node may be given. The structure of the data object can be mapped using the link table. The content table allows the description of the elementary objects of the data object, such as, for example, materials, accessories, business partners, client-specific attributes, master data attributes as well as other contents, to be stored in text form.

It may be advantageous if an indexable readable object or document structure is formed as a result of the conversion of the data object into the readable object. This object can be indexed using conventional search engines. The indexes created can then be stored within the search engines and can be searched, whereby fast response times to search queries can be achieved.

According to an advantageous embodiment, it may be possible to map the entire tree structure of a data object within only one readable object. If the data object is stored in a single readable object, this document contains information on the nodes, links and contents and thus gives a complete picture of the data object.

A further possibility is to create one readable object for each node. In this case this readable object contains information on the respective node, the links directly connected thereto and thus information on the neighboring nodes, and the content of the respective node. These readable objects may be smaller in size but do not allow any direct conclusions on the structure of the entire data object.

A further possibility for mapping a data object into a readable object is to map the structure of an object into three different types of readable objects, which means that a first readable object may be created for the links, a second readable object for the nodes, and a third readable object for the content, wherein these readable object may be of different types. Furthermore a readable object may be created for each node, link, and content, respectively. Such, each table row will be mapped onto a single document.

The created documents can, for example, be Standard Generalised Markup Language (SGML), or Extensible Markup Language (XML) documents. The advantage here would be that these documents are flat, which means searchable as well as structured.

According to a further advantageous embodiment, it may be possible to convert the data objects temporarily into readable objects, index them and then delete them. Only the created index is used in the following search. In the event of a successful search, a link to the data object may be displayed. In order to display the content of the data object, however, the content has to be converted into the readable,object again. An advantage may occur that there is no data redundancy, because the data may be already available in the data objects and need not be stored for a second time within the readable objects.

According to a further embodiment, it may be possible to store the readable object created from the data objects permanently on a server. An index can also be created for this readable object. In a subsequent search, searching can be carried out both via the index and also via a full text search in the stored readable object. An advantage may arise that the search process does not influence the capacity of the database because it is only necessary to search on the readable object and not in the database itself.

In order to facilitate the search, attributes may be allocated to the documents, which means that the type of document can be determined quickly. Document keys may also be allocated, for example, a file name. This document key, for example, may be the name of a node or link.

It is known that a text structure may be searchable using conventional means. However, in order to facilitate the search within the text structure and to map the structure of the data object well into the documents, it has been found that it may be advantageous to use a markup language for creation of the document. This document structure allows the document to be stored according to the structure of the data object. The Standard Generalised Markup Language (SGML) and the Extensible Markup Language (XML), for example, have proved advantageous.

According to an advantageous embodiment, the data objects may be converted into documents according to the pull principle within a variable time in accordance with a time stamp. This has the advantage that the content of the data objects regularly may be made available via the search engine. However, changes within the data objects may not be shown promptly via the search engine.

Thus, it can also be advantageous to convert the data objects into documents depending on administrative information. Individual objects can then be requested to be converted. In this case, only the selected objects are converted into document structures. It is also possible that the conversion of data objects into documents only takes place after a certain number of processes within the data objects so that, for example, a threshold value can be defined for the execution of an update process.

Finally, it has been found that the creation of a document structure can also be event-controlled. Administrative information can be output, for example, when an object is changed. This initiates the process of converting this specific object into a document structure. A plurality of objects can also be converted in such a case.

According to an advantageous embodiment, it may be proposed that the search be executed using a search engine wherein the searchable document structure is used for the search and wherein, in the event of a successful search, the document structure is at least partly displayed. Such a search engine can, for example, be a conventional search engine. Such an engine searches through the document structures with conventional strategies, for example, the full text search or with so-called "robots", and provides a link to the particular documents on request.

It has also been found to be advantageous that an index may be created for the search engine. The index makes it possible to search quickly within the indexed documents. In order to keep the search results up-to-date, the index may be updated at intervals.

It may also be advantageous if the search engine initiates a full text search when requested by a user. This has the advantage that the results may be more up-to-date than those from a search on an index.

Data objects are frequently provided with sensitive content. Access to the content of the data objects must be monitored and safeguarded. Thus, it may be proposed that an authorization check is carried out for the search for a content of the data objects using the search engine. A search can only be executed using the search engine on the data objects if the result of the authorization check is positive, that is to say, if the user has a usage authorization. It may be hereby ensured that information does not reach unauthorized third parties.

The invention may also be embodied in a computer program product for the provision of at least one readable object for a search engine from at least one structured data object stored in a database, the product comprising instructions operable to cause a processor to: extract said structured data object from said database, map structure and contents of said structured data object into a generic data model, the generic data model including nodes related by links and having contents, and create said readable object from said generic data model.

It may be advantageous if the instructions are defined and implemented using object-oriented code, for example, using Java. In this case, the computer program product may be platform-independent. For example, the tables which map the data objects can be converted into Java objects using suitable algorithms and then processed using suitable methods.

A further technical embodiment of the invention may be a computer to provide at least one readable object for a search engine from at least one structured data object stored in a database, comprising: extracting means for extraction of said structured data object from said database, mapping means for mapping structure and contents of said structured data object into a generic data model, the generic data model including nodes related by links and having contents, and creating means for creation of said readable object from said generic data model.

It may be advantageous if first and second storage means are provided. Information about said generic data model can be stored using said first storage means. Said second storage means may be suitable for storing the created readable object.

Access to the readable object for search engines can be achieved via an interface device.

The technical results of the invention also may be solved technically by a computer-readable medium with a computer program product stored thereon for the provision of at least one readable object for a search engine from at least one structured data object stored in a database, the product comprising instructions operable to cause the processor to: extract said structured data object from said database, map structure and contents of said structured data object into a generic data model, the generic data model including nodes related by links and having contents, and create said readable object from said generic data model.

In addition, the results may be solved technically a display on a display device of a searchable document structure associated with a structured data object stored in a database, wherein said searchable document structure is formed from a generic data model, said generic data model including a mapping of structure and contents of said structured data object, said structured data object having been extracted from said database.

### BRIEF DESCRIPTION OF THE DRAWINGS

The invention is explained in detail below with reference to the drawings which show exemplary embodiments. In the figures are shown:
- Fig. 1: a method according to the invention;
- Fig. 2: a listing of exemplary object structures;
- Fig. 3: structures of sample business objects;
- Fig. 4: a representation of a sample business object on a screen;
- Fig. 5: a conversion of a generic data model into tables;
- Fig. 5a: a structure of a node table;
- Fig. 5b: a structure of a link table;
- Fig. 5c: a structure of a content table;
- Fig. 6: a conversion of a business object into a document;
- Fig. 7: a conversion of a business object into a plurality of documents;
- Fig. 8: a further conversion of a business object into a plurality of documents;
- Fig. 9: a detailed method according to the invention;
- Fig. 10: a conversion of data objects into documents;
- Fig. 11: a further conversion of data objects into documents;
- Fig. 12: a further conversion of data objects into documents;
- Fig. 13: a search request;
- Fig. 14: a further search request.

### DETAILED DESCRIPTION

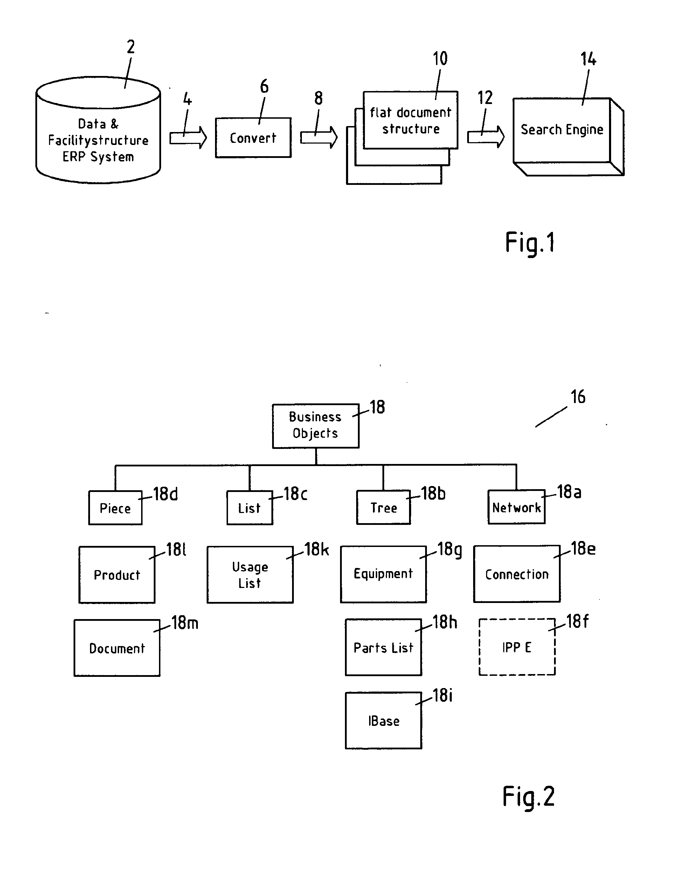

Figure 1 depicts an exemplary method according to the invention. Data of an Enterprise Resource Planning (ERP) system may be stored in a database 2. Such an ERP system may consist of various modules which contain various business applications, such as for example, financial accounts, staff planning, material planning, business partner data, parts lists, maintenance and much more. In the databases of the ERP system, the contents and structures may be stored in so-called business objects. A business object may be a structured data object which, for example, maps data of a technical installation, such as, for example, a refinery, a ship, or an aircraft into a structure. In the business objects, the data may be created in a nested fashion, and each business object can in turn contain its own objects.

In the method shown, static or quasi-static business objects, also called data entities, may be preferably made available for the search. These may be, for example, material masters, equipment and business partners. These data have formatted attributes such as master data attributes, client-specific attributes, classification and feature-imprinting attributes. The data objects contain information fields in which the contents of the business objects may be described using text.

Figure 2 shows various implementations 16 of exemplary object structures. These object structure implementations 16 may include, for example, object structures 18a-d. Thus, a business object 18 can belong to the piece list structure group 18d, and, for example, represent a product 181 or a document 18m. A business object 18 can also be allocated to the list structure group 18c. In this case its content can also be a proof of usage list 18k. A business object 18 can also be allocated to the tree structure group 18b, in this case its content can be an equipment 18g, a parts list 18h, or again business object 18i, e.g., IBase. This means that within a business object 18, a nesting of business objects 18 can occur. Finally, a business object 18 can be allocated to the network structure group 18a. In this case, its content could be a connection 18e or an IPPE 18f.

As shown in Fig. 1, in step 4 a business object 18 or a plurality of business objects 18 may be extracted from the database 2 and converted into a generic data model in step 6. Thus, after executing step 6, there exists a generic data structure for each business object 18. This generic data structure can be converted into a set of text documents in step 8 using suitable algorithms, for example in Java programmed objects.

For this purpose, a suitable Java object may be created for each business object 18, and suitable implemented methods allow the conversion into a flat text document 10. Each text document 10 can represent a part, a whole or a plurality of business objects 18.

In step 12 an index may be created, which can be used for the search using a search engine 14. Instead of creating an index in step 12, a full text search in the set of text documents 10 can be initiated by the search engine 14 in step 12. Using the search engine 14 it may be possible to search for information from the business objects 18 wherein this information may be locatable in the text documents 10.

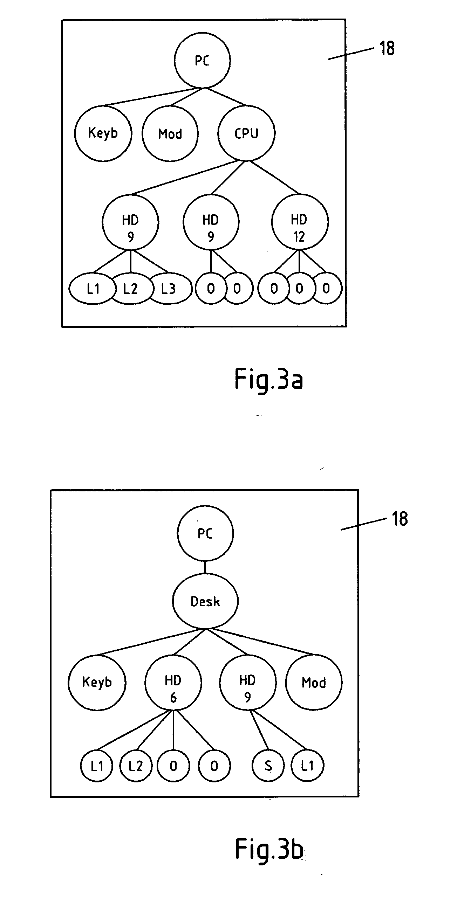

Figure 3 depicts different structures of sample business objects 18. Figure 3a depicts the structure of a first business object 18. This business object 18 represents a PC, connected with a keyboard, a modem, and a CPU. The CPU in turn has three hard disks which for their part are subdivided into various partitions. The hard disks are additionally characterized by their size.

Figure 3b depicts the structure of a further business object 18 which represents a PC. This PC has a desktop casing into which are built or to which are connected a keyboard, two hard disks, and a modem. The two hard disks, which again are also characterized by their size, have different partitions. The structures of these business objects 18 reproduce the structures of the real objects. The business objects 18 shown in Fig. 3 describe the structure of the products, here the PCs with their components.

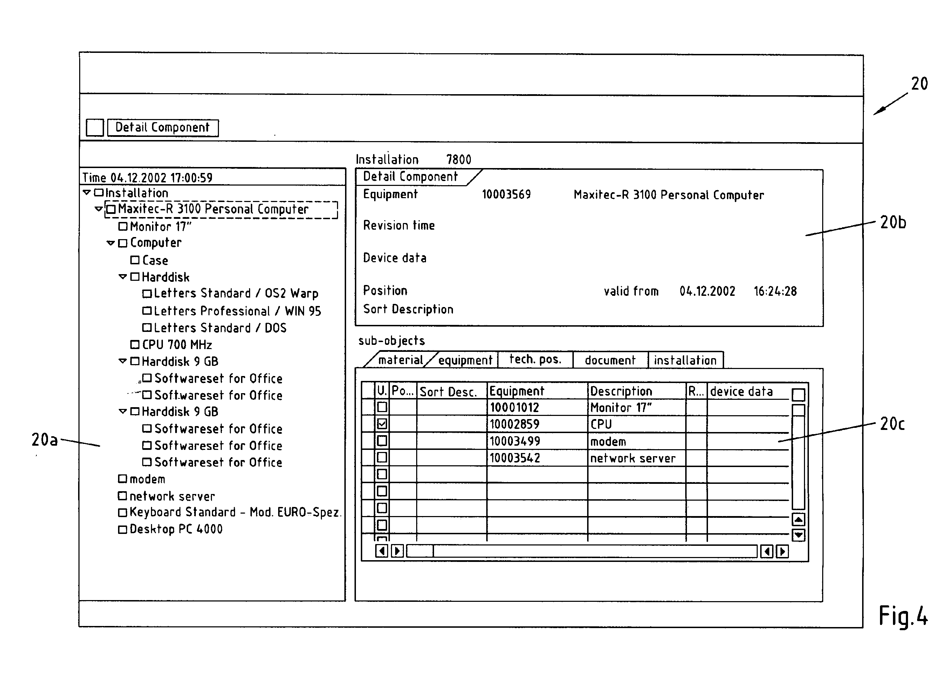

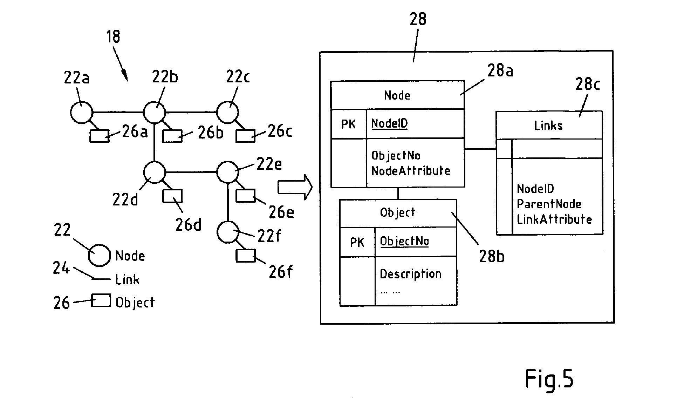

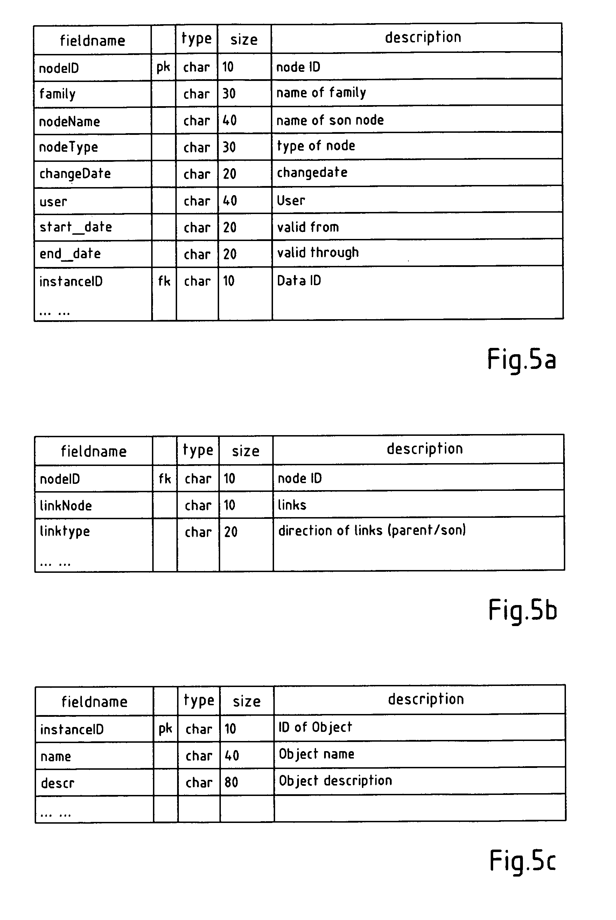

Figure 4 depicts a representation 20 of a business object 18 on a display. The individual components with their subcomponents may be arranged in a hierarchical structure 20a. In addition, detailed information on the individual components may be displayed 20b, 20c. The conversion of these business objects into text documents 10 may take place according to a procedure as shown in Fig. 1. The conversion of the generic data model into text documents 10 according to steps 6 and 8 may be made possible by an intermediate step, the creation of tables 28, 28a-c in Figs. 5, 5a-c.

A business object 18 is again depicted in Fig. 5. This business object 18 may be formed of nodes 22, e.g., 22a-f, links 24 and contents 26, e.g., 26a-f. The structure of the business object 18 may be mapped into the nodes 22a-f and the links 24. According to Fig. 5, the structure of the business object 18 may be hierarchical. Each node 22a-f may be linked to at least one further node 22a-f. The structure of the business object 18 can be represented by the nodes 22a-f and the respective links 24. The contents 26a-f of the business object 18 can be assigned to the structure. Since the nodes 22, the links 24 and the contents 26 represent the generic data model, each arbitrary business object 18 can be converted into a text document 10 using a suitable algorithm.

As an intermediate step, tables 28 may be created for the nodes 22, the links 24 and the contents 26. A table 28a may be created for the nodes 22, a table 28c may be created for the links 24 and a table 28b may be created for the contents 26.

Figure 5a shows the structure of a table 28a. A table 28a, which has various fields, may be created for each node 22. The name of the node, the name of the entire family, the type of node or the user, for example, may be stored within these fields. The table 28a may be divided into the columns field name, type, length and brief description.

Figure 5b shows the structure of a table 28c which represents the links 24 of the object structure. The respective links 24, together with their source nodes 22 and target nodes 22, may be described in this table 28c. As depicted, the table 28b comprises, for example, the columns field name, type, length and brief description. A table 28c can be generated for each link 24. Also a table 28c with the appropriate links 24 can be created for each node 22.

Figure 5c depicts a table 28b which describes the contents 26 of the respective node 22. The table 28b may be divided into the columns field name, type, length and brief description. The contents 26 of the respective nodes 22, together with a description, may be stored into this table 28b.

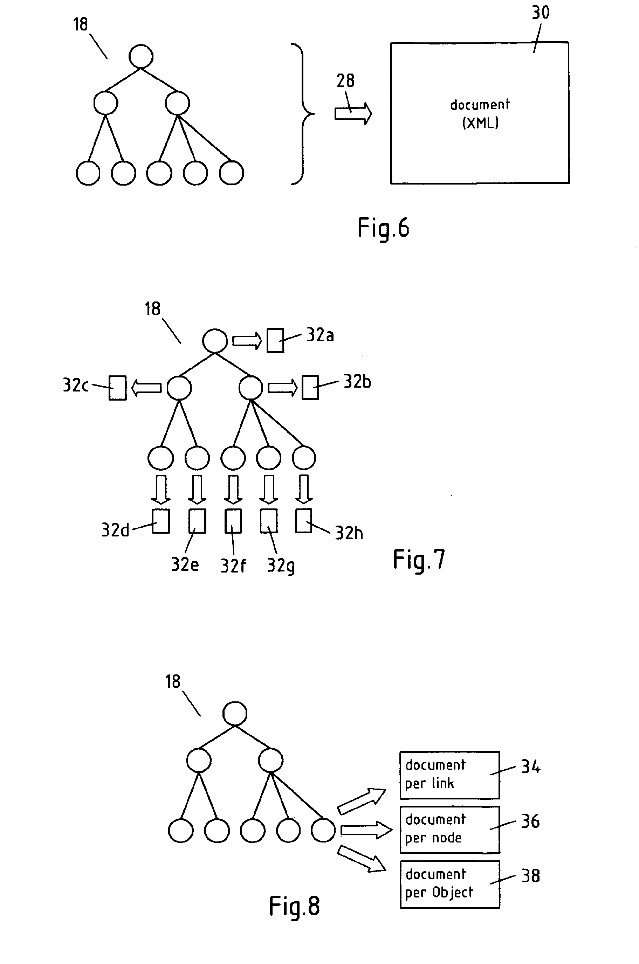

As a result of the conversion of the generic data model into tables 28, a structured text document 10 which is searchable can be created using suitable algorithms, as is shown in Figs. 6-8.

In Fig. 6, a single document 30 is depicted as being created from a business object 18 in step 28. The document 30 represents the entire tree structure 18b, for instance, of the business object 18. The document 30 itself can be an XML document 30 for example. The XML document 30 may be, on the one hand, flat and thus searchable and on the other hand, structured.

Fig. 7 depicts how separate documents 32a-h may be created, one document 32 for each node 22, together with its links 24 of a business object 18.

Finally, as shown in Figure 8, a business object 18 may be mapped into documents 34, 36, 38 such that a document 36 may be created per node 22, a document 34 per link 24, and a document 38 per object contents 26.

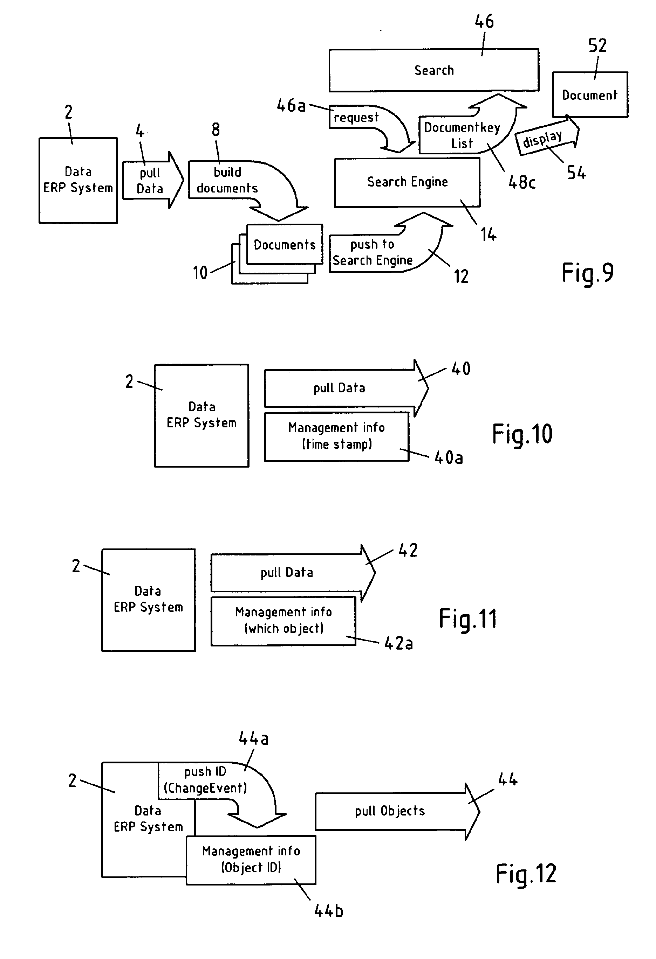

Figure 9 shows a possible sequence of a search request, and the preceding creation of a document index. The business objects 18 may be extracted from the database 2 (step 4) and text documents 10may be created (step 8). The extraction in accordance with step 4 can take place in different ways, as shown in Figs. 10-12.

As shown in Fig.10, an extraction may be possible using the pull method 40. After data 40a have been extracted, these data 40a may be converted into text documents 10, and an index may be created from the text documents 10. This index may be used for the search using search engines 14. Since the data 40a may be extracted with a time delay, the index may not be always up-to-date. Deleted objects still appear in the index and newly created objects possibly may not yet be present in the index.

As shown in Fig. 11, data 42a may be again extracted from the database 2 using a pull method 42. On this occasion, however, the data 42a may be extracted using administrative information. This means that the data 42a which are to be extracted can be specified explicitly. Thus, which data 42a are to be extracted and indexed can be user-, or event-controlled.

Figure 12 shows an event-controlled, automatic extraction of data from the database 2. In the event of changes to the data in the database 2, the database 2 may be notified in step 44a which data have changed. By this means the changed data may be extracted in each case in step 44b and made available for the creation of an index (step 44). This means that the index may be always up-to-date. Any change in the data leads to an updating of the index.

As shown in Fig. 9, after the data have been extracted (step 4), and the documents 10 have been created (step 8), an index may be created in step 12 which may be made available to the search engine 14.

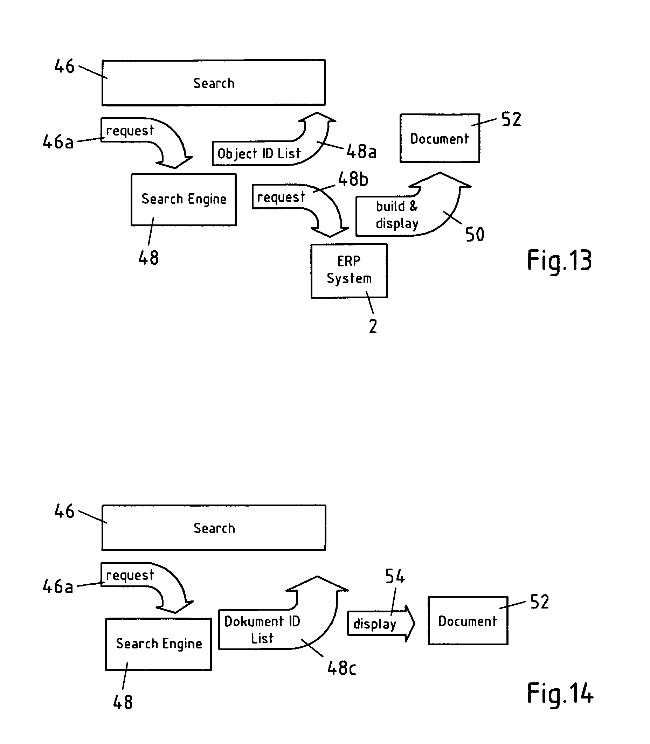

The documents 10 may be stored either permanently or non-permanently. Figure 13 shows a search request for the case of non-permanent data storage and Fig. 14 shows a search request for the case of permanent data storage. In this context, storage is permanent if the intended term of the storage is indefinite at the instance of storage. A document 10 that is stored permanently nonetheless may be modified, deleted or overwritten, for example, at a later date, if desired.

As shown in Fig. 13, a search request 46a may be received via a search mask 46 and passed onto the search engine 48 in step 46a. The search engine 48 makes available an index which has been created from the documents 10. Using this index, a hit list 48a can be output to the search mask 46 in step 48a. This hit list 48a contains the object identifications which correspond to the search request 46a. By means of a user selection in the search mask 46, an output request 48b relating to the searched document 10 (step 48b) can be executed using the object hit list 48a. Such an output request 48b may be directed to the database 2 whereupon in step 50 a document 10 may be re-created as document 52 for the searched object 18. This means that after a business object 18 has been found, a document 52 must be re-created from it. However, data redundancy may be avoided because, after the documents 10 have been created for the creation of the index, they may be deleted again. Documents 52 only need be re-created and displayed for required and requested business objects 18.

Figure 14 shows the display of a document 52 in the case of permanently stored documents 10. After the documents 10 have been created, they may be stored. A search request 46a may be transmitted to the search engine 48 via a search mask 46. In the event of a hit, the search engine 48 produces a document list 48c of links to the corresponding documents 10 to the search mask 46 in step 48c. The user can select the desired documents 10, 52 in the search mask 46 and make a display request 54. The permanently stored document 52 may be displayed immediately to the user on the search mask 46. It is not necessary for the document 52 to be re-created. During a search for objects 18, the database 2 need be not involved.

The search sequence and display of documents as shown in Fig. 14 also appears in Figure 9.

By means of the methods according to the invention it may be possible to execute searches within structured objects 18, whereby conventional search engines can be used.

The invention has presently been shown with reference to exemplary embodiments. Other exemplary embodiments are also embraced by the claims. Individual steps of the methods according to the invention can be executed in a different order and still lead to the same result. The search for business objects is not limited to the business objects specified in the examples.

## Claims

1. A computer-implemented method for the provision of at least one readable object for access by a search engine from at least one structured data object stored in a database, comprising:
- extracting of said structured data object from said database,
- mapping structure and contents of said structured data object into a generic data model, the generic data model including nodes related by links and having contents, and
- creating said readable object from said generic data model.

2. The computer-implemented method of claim 1, wherein said generic data model includes at least three tables.

3. The computer-implemented method of claim 1, wherein said generic data model includes at least one table for mapping nodes of said structured data object.

4. The computer-implemented method of claim 1, wherein said generic data model includes at least one table for mapping links of said structured data object.

5. The computer-implemented method of claim 1, wherein said generic data model includes at least one table for mapping contents of said structured data object.

6. The computer-implemented method of claim 2, wherein said generic data model includes at least one table for mapping nodes, at least one table for mapping contents and at least one table for mapping links of said structured data object.

7. The computer-implemented method of claim 1, wherein said readable object comprises a document structure or a text document.

8. The computer-implemented method of claim 1, wherein the method further comprises creating an indexable document structure from said structured data object.

9. The computer-implemented method of claim 1, wherein precisely one readable object is created from said structured data object.

10. The computer-implemented method of claim 1, wherein a readable object is created for each node of said structured data object.

11. The computer-implemented method of claim 1, wherein a readable object is created for each node, each link, and each content of said structured data object, respectively.

12. The computer-implemented method of claim 1, wherein said readable object includes a non-permanently stored readable object.

13. The computer-implemented method of claim 12, wherein the method further comprises creating an index from said non-permanently stored readable object.

14. The computer-implemented method of claim 1, wherein said readable object includes a permanently stored readable object.

15. The computer-implemented method of claim 14, wherein the method further comprises creating an index from said permanently stored readable object.

16. The computer-implemented method of claim 7, wherein document attributes are associated to said document structure.

17. The computer-implemented method of claim 7, wherein document keys are associated to said document structure.

18. The computer-implemented method of claim 7, wherein said document structure comprises a markup language text document, a standard generalized markup language text document or an extensible markup language text document.

19. The computer-implemented method of claim 1, wherein the provision of said readable object from said structured data object occurs after a variable time interval.

20. The computer-implemented method of claim 1, wherein the provision of said readable object from said structured data object is event-controlled.

21. The computer-implemented method of claim 1, wherein the method further comprises executing a search of the contents of the structured data object using the search engine, , and wherein said readable object is at least partly displayed if the search is successful.

22. The computer-implemented method of claim 21, wherein the method further comprises creating an index for said search engine from said readable object, and wherein executing a search of the contents of the structured data object includes using said index during the search with said search engine.

23. The computer-implemented method of claim 21, wherein executing a search of the contents of the structured data object includes searching said readable object as full text.

24. The computer-implemented method of claim 21, wherein executing a search of the contents of the structured data object includes performing an authorization check for the search and wherein the search may be completed only when permitted by said authorization check.

25. A computer program product for the provision of at least one readable object for a search engine from at least one structured data object stored in a database, the product comprising instructions operable to cause a processor to:
- extract said structured data object from said database,
- map structure and contents of said structured data object into a generic data model, the generic data model including nodes related by links and having contents, and
- create said readable object from said generic data model.

26. The computer program product of claim 25, wherein the instructions include object-oriented programming.

27. The computer program product of claim 25, wherein said generic data model includes at least one table for mapping nodes of said structured data object.

28. The computer program product of claim 25, wherein said generic data model includes at least one table for mapping links of said structured data object.

29. The computer program product of claim 25, wherein said generic data model includes at least one table for mapping contents of said structured data object.

30. The computer program product of claim 25, wherein said generic data model includes at least three tables into which the processor maps structure and contents of said structured data object.

31. The computer program product of claim 30, wherein said generic data model includes at least one table for mapping nodes, at least one table for mapping contents and at least one table for mapping links of said structured data object.

32. The computer program product of claim 25, wherein the readable object comprises a document structure or a text document.

33. The computer program product of claim 25, wherein the instructions are operable further to cause the processor to store said readable object as a non-permanently stored readable object.

34. The computer program product of claim 33, wherein the instructions are operable further to cause the processor to provide an index from said non-permanently stored readable object.

35. The computer program product of claim 25, wherein the instructions are operable to cause the processor to store said readable object as a permanently stored readable object.

36. The computer program product of claim 35, wherein the instructions are operable to cause the processor to provide an index from said permanently-stored readable object.

37. The computer program product of claim 25, wherein the instructions are operable to cause the processor to provide said readable object from said structured data object after a variable time interval.

38. The computer program product of claim 25, wherein the instructions are operable to cause the processor to provide said readable object from said structured data object upon an occurrence of a predetermined event.

39. The computer program product of claim 25, wherein the instructions operable to cause the processor to create said readable object from said generic data model include instructions operable to cause the processor to create one said readable object for each node mapped for said structured data object within said generic data model.

40. The computer program product of claim 25, wherein the instructions operable to cause the processor to create said readable object from said generic data model include instructions operable to cause the processor to create one said readable object for each link mapped for said structured data object within said generic data model.

41. The computer program product of claim 25, wherein the instructions operable to cause the processor to create said readable object from said generic data model include instructions operable to cause the processor to create one said readable object for each content mapped for said structured data object within said generic data model.

42. The computer program product of claim 25, wherein the instructions operable to cause the processor to create said readable object from said generic data model include instructions operable to cause the processor to create one said readable object for each node, one said readable object for each link and one said readable object for each content mapped for said structured data object within said generic data model.

43. A computer for the provision of at least one readable object for a search engine from at least one structured data object stored in a database, comprising:
- extracting means for extraction of said structured data object from said database,
- mapping means for mapping structure and contents of said structured data object into a generic data model, the generic data model including nodes related by links and having contents, and
- creating means for creation of said readable object from said generic data model.

44. The computer of claim 43, further comprising first storage means for storage of said generic data model in tables.

45. The computer of claim 44, further comprising second storage means for storage of said readable object formed from said generic data model.

46. The computer of claim 45, wherein said second storage means comprises non-permanent memory.

47. The computer of claim 45, wherein said second storage means comprises permanent memory.

48. The computer of claim 43, further comprising an interface for access of a search engine to said readable object.

49. The computer of claim 43, further comprising indexing means for indexing said readable object.

50. The computer of claim 43, further comprising searching means for searching within said readable object.

51. The computer of claim 49, further comprising searching means for searching within said index.

52. A computer-readable medium with a computer program product stored thereon for the provision of at least one readable object for a search engine from at least one structured data object stored in a database, the product comprising instructions operable to cause the processor to:
- extract said structured data object from said database,
- map structure and contents of said structured data object into a generic data model, the generic data model including nodes related by links and having contents, and
- create said readable object from said generic data model.

53. The computer-readable medium of claim 52, wherein the instructions include object-oriented programming.

54. The computer-readable medium of claim 52, wherein said generic data model includes at least one table for mapping nodes of said structured data object.

55. The computer-readable medium of claim 52, wherein said generic data model includes at least one table for mapping links of said structured data object.

56. The computer-readable medium of claim 52, wherein said generic data model includes at least one table for mapping contents of said structured data object.

57. The computer-readable medium of claim 52, wherein said generic data model includes at least three tables into which the processor maps structure and contents of said structured data object.

58. The computer-readable medium of claim 57, wherein said generic data model includes at least one table for mapping nodes, at least one table for mapping contents and at least one table for mapping links of said structured data object.

59. The computer-readable medium of claim 52, wherein the instructions are operable further to cause the processor to store said readable object as a non-permanently stored readable object.

60. The computer-readable medium of claim 59, wherein the instructions are operable further to cause the processor to provide an index from said non-permanently stored readable object.

61. The computer-readable medium of claim 52, wherein the instructions are operable further to cause the processor to store said readable object as a permanently stored readable object.

62. The computer-readable medium of claim 61, wherein the instructions are operable further to cause the processor to provide an index from said permanently stored readable object.

63. The computer-readable medium of claim 52, wherein the instructions are operable further to cause the processor to provide said readable object from said structured data object after a variable time interval.

64. The computer-readable medium of claim 52, wherein the instructions are operable to cause the processor to provide said readable object from said structured data object upon an occurrence of a predetermined event.

65. The computer-readable medium of claim 52, wherein the instructions operable to cause the processor to create said readable object from said generic data model include instructions operable to cause the processor to create one said readable object for each node mapped for said structured data object within said generic data model.

66. The computer-readable medium of claim 52, wherein the instructions operable to cause the processor to create said readable object from said generic data model include instructions operable to cause the processor to create one said readable object for each link mapped for said structured data object within said generic data model.

67. The computer-readable medium of claim 52, wherein the instructions operable to cause the processor to create a said readable object from said generic data model include instructions operable to cause the processor to create one said readable object for each content mapped for said structured data object within said generic data model.

68. The computer-readable medium of claim 52, wherein the instructions operable to cause the processor to create said readable object from said generic data model include instructions operable to cause the processor to create one said readable object for each node, one said readable object for each link and one said readable object for each content mapped for said structured data object within said generic data model.

69. A display on a display device of a searchable document structure associated with a structured data object stored in a database, wherein said searchable document structure is formed from a generic data model, said generic data model including a mapping of structure and contents of said structured data object, said structured data object having been extracted from said database.

70. The computer-implemented method of claim 1, wherein said structured data object comprises a business object of an enterprise resource planning (ERP) software.

71. A computer-implemented method for the creation of at least one readable object for a search engine from at least one structured data object stored in a database, comprising:
- extracting said structured data object from said database,
- mapping structure and contents of said structured data object into a generic data model and
- creating said readable object from said generic data model.

72. The computer program product of claim 25, wherein said structured data object comprises a business object of an enterprise resource planning (ERP) software.

73. The computer of claim 43, wherein said readable object comprises a document structure or a text document.

74. The computer of claim 43, wherein said structured data object comprises a business object of an enterprise resource planning '(ERP) software.
